# DEMANDE DE BREVET EUROPEEN

(11) **EP 2 506 185 A1**
(43) Date de publication de la demande: **03.10.2012**
(21) Numéro de dépôt: 11305350.8
(22) Date de dépôt: 29.03.2011
(51) Int. Cl.: G06K 7/00

(54) **Procédé de communication radiofréquence avec détection de la présence d'une puce RFID, et système mettant en oeuvre un tel procédé**

(71) Demandeur: Pollux, 91120 Palaiseau (FR)
(72) Inventeur: Decosse, Jean-Luc, 91470 Limours (FR)
(74) Mandataire: Kingolo, Alain

(57) **Abrégé**

L'invention concerne un procédé de communication radiofréquence comprenant un circuit électronique de lecture/écriture (7) destiné à communiquer à distance avec un circuit électronique d'identification (2). Selon l'invention, le circuit électronique de lecture/écriture (7) étant en mode de veille ou éteint :
- on utilise un circuit électronique de détection (8), indépendant du circuit électronique de lecture/écriture, pour générer de façon répétitive un signal d'excitation adapté à la résonance d'un circuit antenne (L2) au sein de ce circuit électronique de détection et adapté pour engendrer un phénomène de résonance dans un circuit antenne (L3) du circuit électronique d'identification (2) lorsque ce dernier se trouve à la portée du circuit électronique de détection,
- on réalise une analyse de couplage inductif résonant à partir de l'amplitude d'un signal prélevé sur le circuit antenne (L2) du circuit électronique de détection (8),
- en cas de détection de la présence d'un circuit électronique d'identification (2), on active le circuit électronique de lecture/écriture (7) de façon à permettre la communication entre ce circuit électronique de lecture/écriture et le circuit électronique d'identification (2).

## Description

La présente invention concerne un procédé de communication radiofréquence comprenant un circuit électronique de lecture/écriture destiné à communiquer à distance avec un circuit électronique d'identification tel un badge RFID (Radio Fréquences Identification). Il est également prévu un système pour mettre en oeuvre un tel procédé. Par circuit électronique de lecture/écriture, on entend un circuit électronique de lecture et/ou d'écriture.

L'invention trouve une application particulièrement intéressante dans le domaine de contrôle d'accès sans contact mais peut avantageusement s'appliquer à tout système de communication comprenant un lecteur et un badge sans contact.

Plus particulièrement, l'invention concerne le domaine des circuits de veille actifs utilisant la technologie de détection par couplage magnétique en champ proche, notamment pour une communication RFID à 13.56 MHz selon la norme ISO 14443 par exemple.

Concernant les circuits de veille actifs, différentes technologies peuvent êtres utilisées :
- Réveil de façon cyclique du circuit électronique du lecteur avec tentative systématique de lecture/écriture de badges. Cette méthode de détection/identification de moyens d'identification sans contact nécessite une consommation de courant instantanée non négligeable par le lecteur pour l'émission du champ magnétique et la lecture ou tentative de lecture ou autre élément permettant d'identifier la présence d'un média d'identification. Cette solution n'est pas envisageable dans des systèmes embarqués compte tenu des consommations de courant, conduisant à une durée de vie de la pile estimée à quelques jours tout au plus.
- Circuit à variation de capacité : cette solution dépend beaucoup de l'environnement (matériaux du support cylindre, du sol, etc...) rendant sa mise en oeuvre délicate.
- Système utilisant un émetteur récepteur infrarouge. Lorsqu'un média d'identification se trouve dans le champ de rayonnement infrarouge, le lecteur détecte et bascule l'électronique du cylindre en mode actif, où émet un champ magnétique pour établir une communication avec le média d'identification. Cette solution ne permet pas de détecter de façon certaine la présence d'un média d'identification mais détecte tout objet ou autre qui réfléchit le signal infrarouge sur le détecteur infrarouge. Cette méthode de veille conduit à utiliser plus du tiers de l'énergie disponible rien que pour la veille, conduisant à une espérance d'autonomie voisine de 2,5 ans pour une utilisation de 50 cycles ouverture/fermeture quotidiens.

On connaît le document EP0966112 pour détecter un badge radiofréquence par couplage inductif d'un signal de modulation de charge. Le circuit électronique de lecture/écriture analyse le déphasage entre signal émis par un circuit d'antenne et un signal prélevé dans ce circuit d'antenne de façon à activer ou non l'échange avec le badge radiofréquence.

On connaît le document US20070188326 décrivant un processus de veille dans lequel on envoie une impulsion de champ magnétique de courte durée par la voie d'émission d'un circuit lecture/écriture afin de détecter la présence d'une puce radiofréquence. Puis on compare l'amplitude de l'enveloppe du signal reçu sur une voie de réception à une référence stockée. Cette référence est fonction d'un signal déterminé lors de l'impulsion précédente. En fonction de l'écart entre deux signaux successifs, on active ou non la phase d'authentification de la puce radiofréquence.

On connaît également le document FR2833785 décrivant un dispositif de veille qui est intégré dans l'appareil de lecture/écriture, et qui envoie des impulsions de courtes durées. On détecte l'amplitude de l'enveloppe du signal non pas sur une voie de réception mais directement sur l'antenne du circuit d'émission. De la même façon que dans le brevet document US20070188326, ce signal est comparé avec une valeur de référence mesurée précédemment.

L'inconvénient de ces dispositifs est que le circuit de veille obéit souvent à un protocole propriétaire qui est fonction du circuit électronique de lecture/écriture.

La présente invention a pour but un nouveau système de veille économe en énergie. Un autre but de l'invention est de prévoir une adaptation simple avec différents protocoles ou standards de communication radiofréquence entre un lecteur et un badge radiofréquence.

On atteint au moins l'un des objectifs avec un procédé de communication radiofréquence comprenant un circuit électronique de lecture/écriture destiné à communiquer à distance avec un circuit électronique d'identification. Selon l'invention, le circuit électronique de lecture/écriture étant en mode de veille ou éteint :
- on utilise un circuit électronique de détection, indépendant du circuit électronique de lecture/écriture, pour générer de façon répétitive un signal d'excitation adapté à la résonance d'un circuit antenne au sein de ce circuit électronique de détection et adapté pour engendrer un phénomène de résonance dans un circuit antenne du circuit électronique d'identification lorsque ce dernier se trouve à la portée du circuit électronique de détection,
- on réalise une analyse de couplage inductif résonant à partir de l'amplitude d'un signal prélevé sur le circuit antenne du circuit électronique de détection,
- en cas de détection de la présence d'un circuit électronique d'identification, on active le circuit électronique de lecture/écriture de façon à permettre la communication entre ce circuit électronique de lecture/écriture et le circuit électronique d'identification.

Le procédé selon l'invention permet donc de détecter la présence d'un circuit électronique d'identification ou tout moyen d'authentification sans contact tel un badge RFID, dans la zone de communication d'un lecteur sans message d'identification.

Par le caractère indépendant du circuit électronique de détection par rapport au circuit électronique de lecture/écriture, on entend une indépendance de l'électronique, c'est-à-dire de l'intelligence, de l'unité de traitement. L'unité de traitement telle un microprocesseur ou microcontrôleur gérant le circuit électronique de lecture/écriture n'est pas le même que celui gérant le circuit électronique de détection même s'il existe bien sûr une communication entre les deux circuits électroniques. Le circuit électronique de détection ne sert qu'à détecter la présence d'un moyen d'authentification sans pratiquer l'authentification proprement parlée et à mettre le circuit électronique de lecture/écriture en mode actif lorsqu'un moyen d'authentification est détecté.

La présente invention apporte une véritable solution aux inconvénients de l'art antérieur. D'une part, l'invention peut être intégrée dans tout système fonctionnant par couplage magnétique, quelque soit la norme, le protocole de communication la fréquence de la porteuse et laisse un choix sans limite à l'homme du métier dans le choix des circuits ou composants au moment de la conception. D'autre part dans son mode de fonctionnement, la détection ne se fait pas par comparaison avec un signal de référence issu et prélevé des impulsions précédentes comme dans l'art antérieur, mais sur la mesure absolue de la valeur de ce signal avec de préférence une remise à zéro du circuit de détection avant chaque mesure.

De préférence, le circuit antenne du circuit électronique de détection comprend un circuit RLC (résistance-bobine-condensateur) dans lequel la bobine sert d'antenne d'émission. En pratique, pour que le circuit de détection soit bien adapté, on rajoute de préférence une self ou bobine en plus de l'antenne. Généralement, l'antenne est gravée sur un circuit imprimé et sa valeur n'est pas facilement ajustable. Les moyens de réception dans le circuit électronique d'identification peuvent être équivalents à un circuit RLC. Le couplage magnétique a lieu entre les bobines. On peut par ailleurs prévoir un mode de réalisation où le circuit électronique de détection et le circuit électronique de lecture/écriture partagent une même antenne qui est connectée d'une part au circuit de veille et d'autre part au circuit de lecture/écriture du circuit principal. Cette solution est utilisée lorsque le circuit de veille et le circuit de lecture/écriture ne se perturbent pas mutuellement. Si tel était le cas (perturbation mutuelle), alors il suffirait d'utiliser un switch permettant de raccorder l'unité de traitement de l'un puis l'autre circuit.

Selon une caractéristique avantageuse de l'invention, on alimente le circuit électronique de lecture/écriture et le circuit électronique de détection au moyen d'une batterie, pile ou accumulateur. Les deux circuits électroniques de détection et de lecture/écriture peuvent être alimentés par une même batterie et par des batteries différentes. Il s'agit donc d'une alimentation autonome, c'est-à-dire non connectée à une source d'énergie extérieure. La batterie à une durée de vie qui dépend principalement de l'énergie consommée. Il est donc nécessaire que le circuit électronique de lecture/écriture ne soit actif que lorsqu'un circuit électronique d'identification ou moyen d'authentification se trouve dans la zone de communication de son antenne.

A la lecture de ce qui précède, il est donc important de minimiser la consommation de courant, en particulier en minimisant au maximum le courant traversant la bobine antenne du circuit électronique de détection. Pour pouvoir discriminer efficacement, à partir d'un courant faible, l'amplitude d'un signal correspondant à la présence du circuit électronique d'identification, la présente invention prévoit un fort couplage magnétique (inductif) entre la bobine du circuit électronique de détection et celle du circuit électronique d'identification. Pour ce faire, on prévoit un couplage inductif résonant. A la résonance, l'intensité du courant augmente et passe par un maximum. S'il n'y a aucun couplage, l'amplitude du signal circulant dans la bobine du circuit électronique de détection sera forte. S'il y a couplage en présence d'un circuit antenne dans un circuit électronique d'identification proche, alors l'amplitude du signal dans la bobine du circuit électronique de détection sera autant diminuée que le couplage sera fort. Pour que la variation d'amplitude du signal avec couplage et sans couplage soit significative, on prévoit un couplage fort en réalisant un couplage inductif résonant en présence d'un circuit électronique d'identification adapté.

Techniquement, on obtient ce fort couplage, lorsque les impédances du circuit électronique de détection et du circuit électronique d'identification sont adaptées de façon à obtenir une impédance réelle en annulant la composante complexe des circuits. Si ces impédances sont mal adaptées, la majorité du champ magnétique serait réfléchie par le circuit électronique d'identification et non transmise, ce qui diminuerait le couplage magnétique entre la bobine du circuit électronique de détection et celle du circuit électronique d'identification, et qui ne permettrait pas une détection à faible courant.

En d'autres termes, lorsqu'un circuit électronique d'identification sans contact se trouve dans la zone de communication du circuit électronique de détection qui comporte une bobine d'antenne, l'amplitude du champ magnétique émis par le circuit électronique de détection se trouve altéré, la bobine du circuit électronique d'identification interfère avec la bobine antenne d'émission par couplage inductif, ce qui désaccorde sensiblement le circuit d'émission (circuit électronique de détection). Ainsi, il suffit de surveiller l'amplitude du champ magnétique aux bornes de la bobine antenne du circuit électronique de détection.

Selon une caractéristique avantageuse de l'invention, on génère le signal d'excitation de façon cyclique ou périodique, le cycle de génération étant notamment inférieur à 1seconde, de préférence comprise entre 250ms et 400ms. D'autre part, selon l'invention, il suffit d'émettre des impulsions de champ magnétique de très courte durée, n'entrainant qu'une faible consommation de courant et de surveiller par un circuit de détection rapide l'amplitude du signal aux bornes de la bobine antenne du circuit électronique de détection. La récurrence de cette impulsion donne le cycle de veille. Pour des applications liées à l'ouverture d'une porte après authentification d'un badge RFID par exemple, si on estime le temps d'authentification et de traitement d'une ouverture à 600 ms, temps nécessaire dans le cas d'un échange sécurisé, et en acceptant un temps d'attente entre la présentation d'un badge RFID et l'ouverture du cylindre inférieur à une seconde, le temps entre deux impulsions magnétiques successives est de préférence inférieur à 400 ms, idéalement égale ou proche de 300ms.

Selon un mode de mise en oeuvre de l'invention, l'analyse de couplage inductif résonant comprend la mesure du niveau de l'amplitude d'un signal passant par la bobine du circuit électronique de détection, notamment pendant le couplage magnétique entre les deux circuits antennes lorsque ce dernier se trouve à la portée du circuit électronique de détection. En mode de fonctionnement, il est préférable de laisser passer un certain temps avant de réaliser la mesure d'amplitude.

La détection de l'amplitude sur la bobine peut se faire en chargeant un condensateur connecté à la bobine via une diode, ce condensateur étant complètement déchargé avant chaque détection.

De préférence, on active le circuit électronique de lecture/écriture lorsque l'amplitude mesurée sur la bobine servant d'antenne dans le circuit électronique de détection est inférieure à un seuil donné, ce seuil étant fonction de la tension d'alimentation du circuit électronique de détection.

Avantageusement, le signal d'excitation émis est un signal périodique, de faible intensité, à la fréquence de résonance du circuit antenne du circuit électronique d'identification.

Afin de limiter au maximum la consommation, on peut placer le circuit électronique de détection en mode ultra basse consommation entre deux émissions du signal d'excitation.

Selon un autre aspect de l'invention, il est proposé un système de communication radiofréquence comprenant un circuit électronique de lecture/écriture destiné à communiquer à distance avec un circuit électronique d'identification. Le système selon l'invention comprend en outre :
- un circuit électronique de détection, indépendant du circuit électronique de lecture/écriture, pour générer de façon répétitive un signal d'excitation adapté à la résonance d'un circuit antenne au sein de ce circuit électronique de détection et adapté pour engendrer un phénomène de résonance dans un circuit antenne du circuit électronique d'identification lorsque ce dernier se trouve à la portée du circuit électronique de détection,
- une unité de traitement au sein du circuit électronique de détection pour réaliser une analyse de couplage inductif résonant à partir de l'amplitude d'un signal prélevé sur le circuit antenne du circuit électronique de détection, et pour activer le circuit électronique de lecture/écriture de façon à permettre la communication entre ce circuit électronique de lecture/écriture et le circuit électronique d'identification en cas de détection de la présence de ce circuit électronique d'identification.

Avantageusement, le système selon l'invention peut comprendre en outre un cylindre de porte dans lequel sont disposés :
- le circuit électronique de lecture/écriture ;
- le circuit électronique de détection ; et
- une batterie d'alimentation.

L'invention peut donc concerner un système de veille actif qui détecte la présente d'un badge RFID présent dans la zone de communication de l'antenne d'un cylindre électronique autonome alimenté par un accumulateur. Ce cylindre électronique est destiné à être monté sur une porte ou tout autre support et est destiné à faire du contrôle d'accès à partir de la lecture/écriture de circuits intégrés sans contact ou supports d'authentifications ou média d'identification présentés dans le champ de communication du lecteur du cylindre en utilisant la technologie RFID notamment.

Selon un mode de réalisation préféré, le circuit électronique de détection peut comprendre un oscillateur, un modulateur, un convertisseur tension/courant et un microcontrôleur pour :
- commander l'émission du signal d'excitation,
- analyser le couplage inductif résonant après détection de l'amplitude sur la bobine, et
- activer le circuit électronique de lecture/écriture en cas de détection de la présence d'un circuit électronique d'identification.

Pour assurer une grande autonomie dans le temps du cylindre électronique autonome alimenté par un accumulateur, la consommation de l'ensemble de l'électronique du cylindre peut être minimisée en se mettant dans un mode veille actif lorsque le cylindre n'a pas besoin d'opérer de transactions (échanges de données, interrogation d'autorisations d'ouverture etc), mais doit être actif et donc alimenté lorsqu'un moyen d'identification est dans la zone de communication de l'antenne du cylindre.

Par ailleurs, le circuit électronique de détection peut comprendre en outre un circuit de détection d'amplitude disposé entre la bobine et une entrée du microcontrôleur et comprenant :
- une diode dont l'anode est connectée à la bobine et la cathode au microcontrôleur, et
- un condensateur disposé entre la cathode de la diode et la masse.

D'autres avantages et caractéristiques de l'invention apparaîtront à l'examen de la description détaillée d'un mode de mise en oeuvre nullement limitatif, et des dessins annexés, sur lesquels :
La figure 1 est une vue simplifiée d'un cylindre de porte pour la mise en oeuvre de la présente invention ;
La figure 2 est un schéma électronique simplifié d'un système de communication sans contact selon l'invention ;
La figure 3 est une vue plus détaillée du système de la figure 2 ;
La figure 4 est une variante du système de la figure 3 ; et
La figure 5 est une vue illustrant le cycle temporel des différents signaux à travers le système de communication selon l'invention.

Bien que l'invention n'y soit pas limitée, on va maintenant décrire le procédé et le système selon l'invention appliqués à un cylindre pour le contrôle d'accès d'une porte.

On notera que l'invention peut également s'appliquer à tout système de communication sans contact par couplage magnétique dans lequel on souhaite ou non limiter au maximum la consommation d'énergie, en particulier dans des systèmes embarqués.

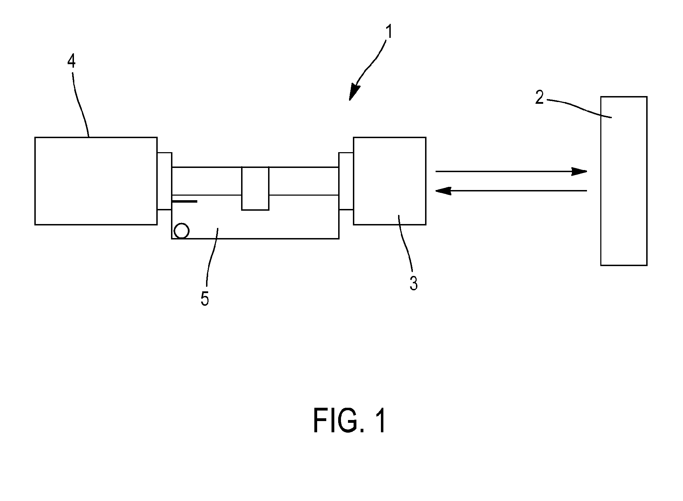

Sur la figure 1, on voit un cylindre 1 de serrure de bâtiment, électronique, selon l'invention, apte à communiquer par radiofréquence avec un badge RFID 2. Il s'agit d'une architecture de cylindre électronique à deux boutons. Le bouton extérieur 3 (bouton placé du côté de la porte dont l'accès est contrôlé par le cylindre) intègre antenne L1 de communication avec le badge RFID en vue d'une authentification et une antenne L2 pour la détection de ce badge RFID. Les unités de traitement, l'alimentation et autre élément nécessaire, se trouvent dans le bouton intérieur 4. Ce cylindre comporte une partie électro-mécanique 5 autorisant ou bloquant l'ouverture de la porte (non représentée). Pour certaines applications, l'ensemble de l'électronique (antenne, circuit e détection, circuit de lecture seule ou lecture/écriture, alimentation etc..) sont placés dans un même bouton (par exemple, ½ cylindre pour les serrures anti-paniques)

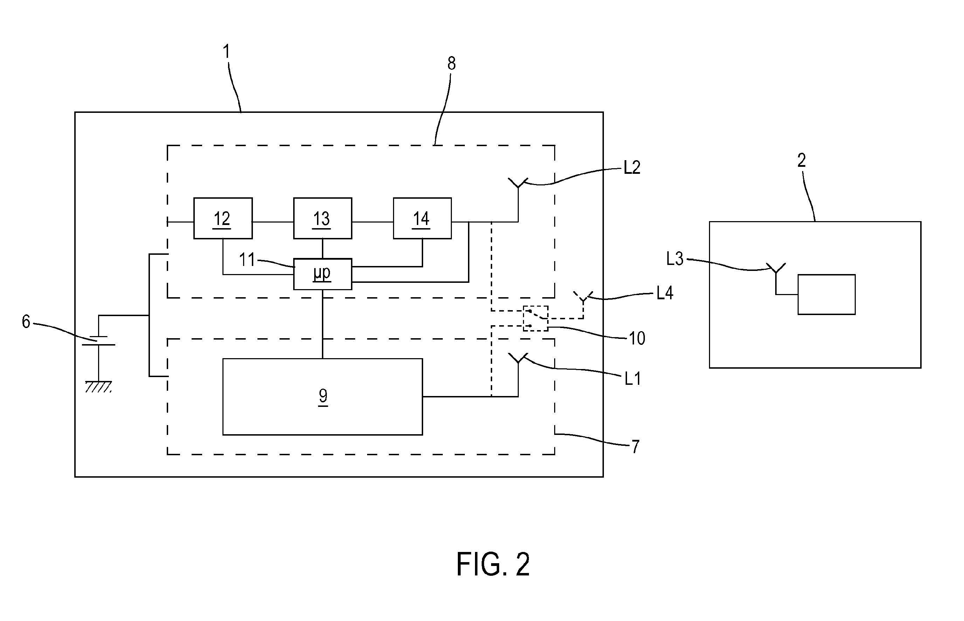

Sur la figure 2, on voit un schéma électronique simplifié illustrant de façon non exhaustive des modules électroniques utilisés pour la mise en oeuvre de l'invention. Le cylindre 1 comporte une alimentation autonome (non reliée au secteur) telle une batterie 6 alimentant un circuit électronique de lecture/écriture 7 (qui peut être un circuit de lecture seule) et un circuit électronique de détection 8. De façon très schématique, le circuit électronique 7 comporte une unité de traitement 9 pour le traitement du signal, l'authentification du badge RFID, l'autorisation ou non d'ouverture mécanique de la porte. Ce circuit électronique de lecture/écriture 7 n'entre en communication avec le badge RFID 2 via les antennes respectives L1 et L3, uniquement lorsque le circuit électronique de détection 8 a détecté la présence du badge RFID 2 qui est un circuit électronique d'identification. Les deux circuits 8 et 9 sont dits indépendants dans la mesure où chacun comporte sa propre intelligence. L'alimentation peut être commune ou non. De la même manière, en variante, l'antenne d'émission peut être commune et connectée en permanence aux deux circuits 8 et 7 où bien commutée telle que représentée en pointillé sur la figure 2 où l'on voit une antenne commune L4 connectée alternativement soit au circuit de détection 8 soit au circuit de lecture/écriture 7 via un commutateur ou switch 10.

Le circuit électronique de détection 8 comprend un micro contrôleur 11 contrôlant :
- un oscillateur 12 apte à générer un signal d'excitation qui est sinusoïdal de très courte durée,
- un modulateur 13 pour délimiter convenablement la durée du signal d'excitation, et
- un convertisseur tension/courant 14 pour alimenter l'antenne d'émission L2.

Le micro contrôleur 11 récupère également le signal alimentant l'antenne d'émission L2 de façon à détecter la perturbation due à un couplage mutuel avec le badge RFID 2 compatible.

L'invention est aussi remarquable par le fait qu'elle permet de discriminer entre badge RFID compatible (couplage optimisé) et autre badge RFID non compatible (couplage non optimisé).

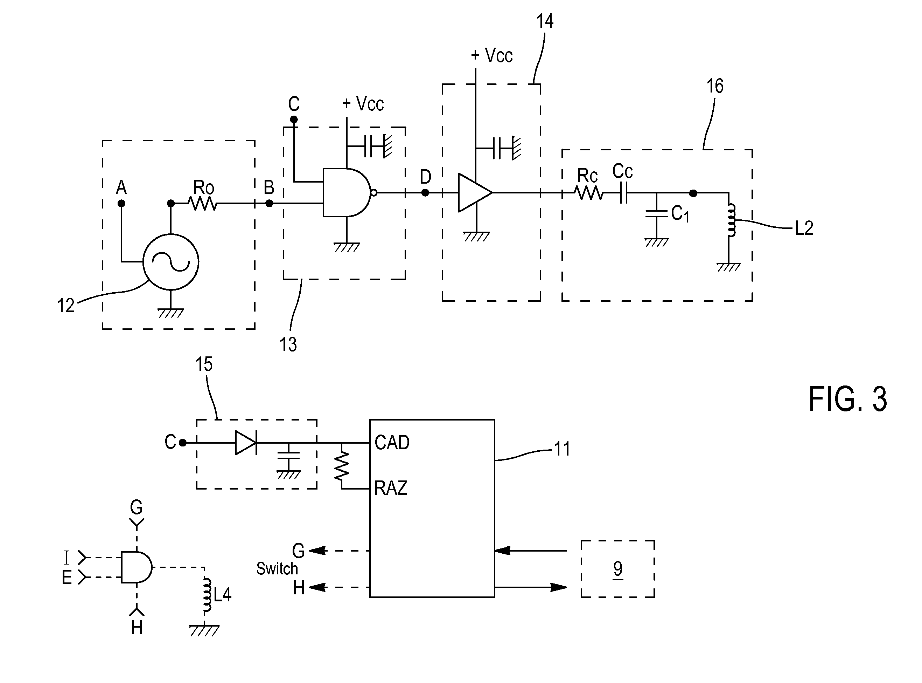

Sur la figure 3, on voit un peu plus en détail la disposition des composants électroniques intervenant dans le circuit électronique de détection 8. La bobine d'antenne L2 permet d'émettre un champ magnétique oscillant. L'oscillateur 12 est un montage oscillateur à 13,56MHz générant périodiquement des séquences de signaux sinusoïdaux de très courte durée. Le modulateur 13 est un circuit logique additionnant le signal produit par l'oscillateur 12 via une résistance R0 (en série) avec un signal de commande provenant du micro contrôleur 11. Ce modulateur 13 permet de moduler en amplitude la tension de l'oscillateur. Le convertisseur tension/courant 14 permet d'une part de générer un champ magnétique dans l'antenne L2 par passage de courant et d'autre part de régler le niveau du courant au plus bas pour minimiser la consommation. La bobine antenne L2 est intégrée au sein d'un ensemble 16 dit circuit antenne comprenant en outre une résistance Rc et des condensateurs Cc et C1 dont les paramètres sont déterminés en accord avec un circuit antenne équivalent du badge RFID 2 comprenant l'antenne L3. La valeur des condensateurs est déterminée de façon à éliminer la partie complexe de l'impédance lorsqu'un badge RFID est dans la zone de l'antenne L2. Cela permet ainsi d'assurer un couplage magnétique entre l'antenne L2 et l'antenne L3 avec un minimum de réflexion de champ magnétique par le badge RFID 2 (circuit électronique d'identification).

On distingue également un détecteur 15 pour détecter la variation de niveau du champ magnétique aux bornes de la bobine antenne L2 du circuit interrogateur lorsqu'un média d'identification est dans la zone de communication de la bobine antenne L2. Le circuit de détection 15 est constitué par une diode Schottky rapide D1 et d'une capacité Cn (non représentés sur la figure 2). Ce circuit de détection n'est qu'un exemple de réalisation et il appartient à l'homme du métier d'utiliser d'autres méthodes de détection de variation de niveaux.

Toujours pour minimiser la consommation de courant, le circuit 8 passe en mode inactif lorsqu'aucun champ magnétique n'est envoyé à l'antenne. Il est évident, pour l'homme du métier que ce circuit 8 peut être réalisé de façon différente. Le système est performant lorsqu'on applique à la bobine antenne du circuit électronique 8 des impulsions d'oscillations à la fréquence d'accord des circuits antennes comprenant respectivement L2 et L3, de courtes durées avec une amplitude minimale exploitable par le circuit électronique de détection.

L'ensemble est piloté par un micro contrôleur 11 rapide ultra basse consommation et disposant à minima d'un « watchdog » (chien de garde électronique) de réveil périodique, d'un convertisseur analogique numérique CAD et d'une référence de tension si nécessaire.

Ce micro contrôleur 11 pilote le circuit 8 pour :
- la mise en route de l'oscillateur 12,
- la décharge de la capacité de détection Cn, et
- L'envoi du signal de modulation sur le modulateur 13.

La tension d'alimentation Vcc peut être surveillée en la comparant à la tension de référence directement issue du micro contrôleur. Cela permet de définir des niveaux de détection différents suivant l'état de l'accumulateur.

Lors de la détection, le signal provenant de la diode D1 est envoyé sur le convertisseur analogique numérique CAD du micro contrôleur 11. Suivant la valeur de la tension détectée, le micro contrôleur activera ou non l'électronique du cylindre.

Pour s'assurer qu'à chaque cycle de mesure, le niveau détecté par la diode D1 et Cn ne soit perturbée par les mesures précédentes, c'est-à-dire qu'une tension résiduelle subsiste aux bornes de la capacité Cn, un cycle de décharge de la capacité est réalisé de façon systématique avant chaque mesure. Ainsi, avant chaque détection, la capacité Cn est déchargée par la mise à zéro du connecteur RAZ correspondant sur le micro contrôleur 11.

Concernant la valeur de la capacité Cn, elle est définie pour que la constante de temps RCn soit très supérieure au temps de traitement du convertisseur analogique numérique CAD, ou R représente la résistance équivalente du micro contrôleur vue par le circuit de détection. Cela permet de minimiser le temps de l'impulsion du champ magnétique émis et de laisser le temps au micro contrôleur d'effectuer l'acquisition de la tension aux bornes de l'antenne même lorsqu'aucun champ n'est appliqué sur l'antenne.

Les sorties G et H du microcontrôleur 11 peuvent être utilisées par un switch lorsqu'on utilise une seule antenne L4 par exemple à la place des deux antennes L1 et L2. Ce switch est représenté schématiquement en pointillé sur la figue 3. L'entrée I serait reliée à un modulateur/démodulateur du circuit 9. L'entrée E est l'entrée du circuit de détection. Les entrées G et H sont des commandes permettant de sélectionner soit l'entrée I soit l'entrée E pour une connexion avec l'antenne unique L4.

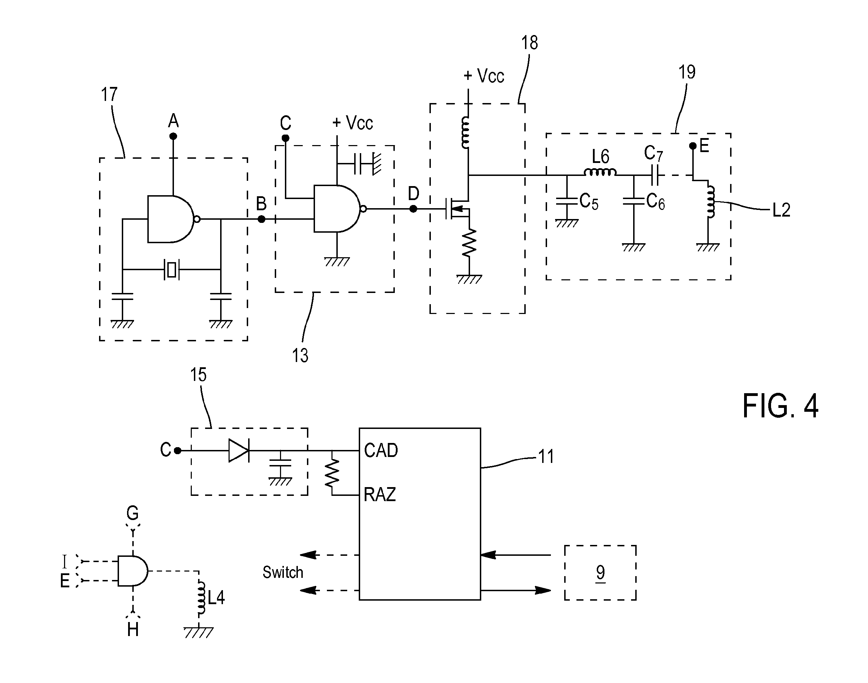

Sur la figure 4, on voit une variante du circuit de la figure 3. Les éléments identiques conservent les mêmes références entre les deux figures 3 et 4. Le circuit oscillateur 17 est différent car il intègre notamment un oscillateur quartz en parallèle d'un circuit logique (NON-ET). En effet, il est difficile de générer en pratique des signaux réellement sinusoïdaux à partir d'un oscillateur sinusoïdal. Il est parfois préférable d'utiliser un signal périodique provenant d'un quartz puis de filtrer par un circuit afin d'obtenir un signal sinusoïdal de grande qualité. Le modulateur 13 est additionne le signal produit par l'oscillateur 17 avec un signal de commande provenant du micro contrôleur 11. Le convertisseur 18 permet d'une part de générer un champ magnétique dans l'antenne L2 par passage de courant et d'autre part de régler le niveau du courant au plus bas pour minimiser la consommation. Ce convertisseur 18 est constitué par un transistor MOS dont la grille est reliée à l'entrée D, la source à la masse via une résistance R1, et le drain à la tension d'alimentation via une bobine L5. La bobine antenne L2 est intégrée au sein d'un ensemble 19 circuit passe bande à 13.56MHz dit circuit antenne comprenant en outre une bobine L6 et des condensateurs C5, C6 et C7 dont les paramètres sont déterminés en accord avec un circuit antenne équivalent du badge RFID 2 comprenant l'antenne L3. La valeur de la bobine L6 et des condensateurs est déterminée de façon à éliminer la partie complexe de l'impédance lorsqu'un badge RFID est dans la zone de l'antenne L2. Cela permet ainsi d'assurer un couplage magnétique entre l'antenne L2 et l'antenne L3 avec un minimum de réflexion de champ magnétique par le badge RFID 2 (circuit électronique d'identification).

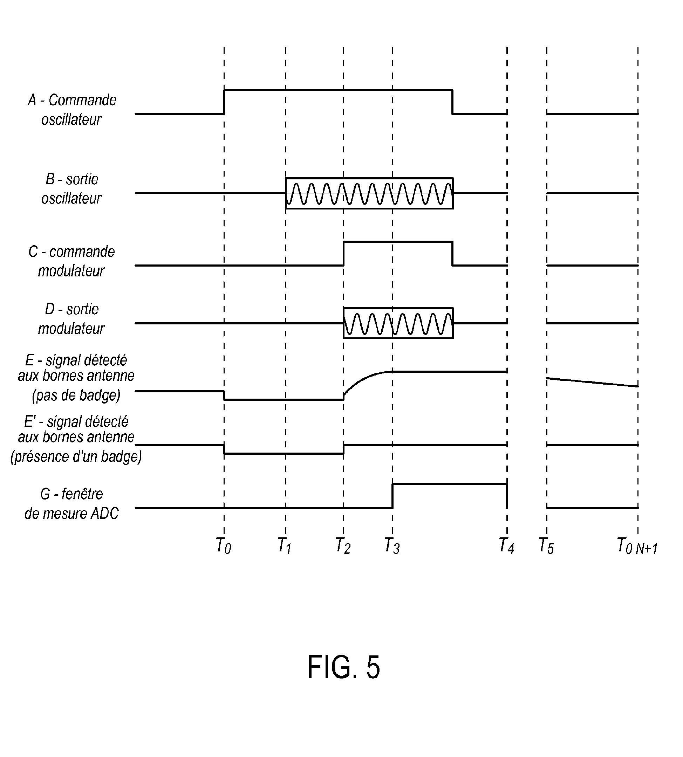

Sur la figure 5 on voit un cycle temporel des différents circuits ou composants tels que représentés sur la figure 3.

To est l'origine des temps du début d'un cycle de détection de circuit électronique d'identification ou badge RFID. T1 représente le temps nécessaire à la mise en route de l'oscillateur à 13.56MHz lorsque la tension d'alimentation (commande oscillateur) est appliquée à l'oscillateur 12 de la figure 3 au point A par l'intermédiaire du micro contrôleur 11 (inférieur à la ms). L'oscillateur 12 alimente le modulateur 13 au point B en un signal sinusoïdal.

Au temps To de mise en route de l'oscillateur à 13.56MHz, une RAZ du circuit de détection 15 est opérée par la mise à l'état bas de la sortie RAZ du micro contrôleur (sur la figure 3).

Au temps T2, supérieur au temps T1, la sortie RAZ du micro contrôleur 11 est en haute impédance (niveau libre) et le micro contrôleur envoie au modulateur 13 un pulse voisin de 2µs au point C. En sortie D du modulateur 13, on obtient un signal sinusoïdal de durée identique à la durée du pulse appliqué au point C.

Cette impulsion est appliquée à la bobine d'antenne L2 du circuit électronique de détection 8 par l'intermédiaire du convertisseur tension/courant 14 et du circuit antenne 16 réalisant une adaptation d'impédance (suppression des parties complexes).

La mesure de la tension détectée par le circuit de détection 15 est faite à partir du temps T3, moment où la tension détectée ne varie plus en amplitude dans le temps et jusqu'au temps T4, temps nécessaire au micro contrôleur de faire l'acquisition et le traitement analogique numérique. Ce temps dépend de l'horloge du micro contrôleur et est estimé à 10µs. Le circuit de détection 15 a un temps de réponse voisin de la micro seconde.

Ensuite, suivant la valeur du signal détectée, un signal peut être envoyé vers le circuit électronique de lecture/écriture 7 (unité de traitement 9) par le micro contrôleur pour réveil.

En absence de badge RFID, le signal de détection aux bornes de l'antenne L2 est illustré en E sur la figure 4. Ce signal présente une zone transitoire entre T2 et T3 où il progresse de façon continue avant stabilisation.

En présence de badge RFID, le signal de détection est illustré en E' avec un saut d'amplitude quasi instantané en T2 puis stabilisation à un niveau d'amplitude inférieur à celui du signal détecté en absence de badge RFID. Le circuit électronique de lecture/écriture 7 peut ensuite communiquer avec le circuit électronique d'identification (badge RFID). Le signal de réveil est envoyé si le niveau détecté est inférieur à une valeur seuil. Dans le cas contraire, aucun signal n'est envoyé, et le micro contrôleur se met en état de « watchdog » pour une consommation minimale et recommence un nouveau cycle 300ms plus tard après le temps To. Pour garantir une consommation minimale pendant l'état de « watchdog » du micro contrôleur 11, on prévoit que juste avant l'entrée en mode « watchdog », l'ensemble des pattes ou connecteurs du micro contrôleur 11 n'ait pas un état à maintenir.

Lorsqu'un badge RFID est dans la zone de communication de la bobine antenne L2, un dialogue peut s'opérer entre le micro contrôleur 11 et le circuit électronique de lecture/écriture. Ainsi, dès la détection d'un badge RFID, un signal peut être envoyé vers le circuit électronique de lecture/écriture 7. Le micro contrôleur 11 du circuit électronique de détection peut ensuite attendre une information de l'électronique du cylindre pour redémarrer son cycle de détection de média d'identification tous les 300ms.

L'exemple décrit selon la présente invention permet donc d'envoyer périodiquement (typiquement toutes les 300ms) une impulsion de courant dans la bobine de couplage, via un réseau accordé à 13,56MHz, puis de mesurer la forme d'onde de l'atténuation du signal d'oscillation sur cette bobine. Le niveau de l'atténuation permet de valider ou non la présence d'un badge RFID.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de communication radiofréquence comprenant un circuit électronique de lecture/écriture (7) destiné à communiquer à distance avec un circuit électronique d'identification (2), **caractérisé en ce que**, le circuit électronique de lecture/écriture (7) étant en mode de veille ou éteint :
- on utilise un circuit électronique de détection (8), indépendant du circuit électronique de lecture/écriture (7), pour générer de façon répétitive un signal d'excitation adapté à la résonance d'un circuit antenne (16) au sein de ce circuit électronique de détection (8) et adapté pour engendrer un phénomène de résonance dans un circuit antenne (L3) du circuit électronique d'identification lorsque ce dernier se trouve à la portée du circuit électronique de détection,
- on réalise une analyse de couplage inductif résonant à partir de l'amplitude d'un signal prélevé sur le circuit antenne (16) du circuit électronique de détection,
- en cas de détection de la présence d'un circuit électronique d'identification (2), on active le circuit électronique de lecture/écriture de façon à permettre la communication entre ce circuit électronique de lecture/écriture (7) et le circuit électronique d'identification (2).

2. Procédé selon la revendication 1, **caractérisé en ce qu'**on alimente le circuit électronique de lecture/écriture (7) et le circuit électronique de détection (8) au moyen d'un accumulateur (6).

3. Procédé selon la revendication 1 ou 2, **caractérisé en ce qu'**on génère le signal d'excitation de façon cyclique.

4. Procédé selon la revendication 3, **caractérisé en ce que** le cycle de génération du signal d'excitation est inférieur à 1 seconde, de préférence entre 250ms et 400ms.

5. Procédé selon l'une quelconque des revendications précédentes, **caractérisé en ce que** le circuit antenne (16) du circuit électronique de détection comprend un circuit RLC (résistance-bobine-condensateur) dans lequel la bobine (L2) sert d'antenne d'émission.

6. Procédé selon la revendication 5, **caractérisé en ce que** l'analyse de couplage inductif résonant comprend la mesure du niveau de l'amplitude d'un signal passant par la bobine (L2) du circuit électronique de détection.

7. Procédé selon la revendication 6, **caractérisé en ce qu'**on détecte (15) l'amplitude sur la bobine (L2) en chargeant un condensateur connecté à la bobine via une diode, et on décharge complètement le condensateur avant chaque détection.

8. Procédé selon l'une quelconque des revendications précédentes, **caractérisé en ce que** le signal d'excitation émis est un signal périodique à la fréquence de résonance du circuit antenne (L3) du circuit électronique d'identification (2).

9. Procédé selon l'une quelconque des revendications 5 à 8, **caractérisé en ce qu'**on active le circuit électronique de lecture/écriture (7) lorsque l'amplitude mesurée sur la bobine (L2) servant d'antenne dans le circuit électronique de détection est inférieure à un seuil donné, ce seuil étant fonction de la tension d'alimentation du circuit électronique de détection.

10. Procédé selon l'une quelconque des revendications précédentes, **caractérisé en ce qu'**on place le circuit électronique de détection (8) en mode ultra basse consommation entre deux émissions du signal d'excitation.

11. Système de communication radiofréquence comprenant un circuit électronique de lecture/écriture (7) destiné à communiquer à distance avec un circuit électronique d'identification (2), **caractérisé en ce qu'**il comprend en outre :
- un circuit électronique de détection (8), indépendant du circuit électronique de lecture/écriture (7), pour générer de façon répétitive un signal d'excitation adapté à la résonance d'un circuit antenne (16) au sein de ce circuit électronique de détection et adapté pour engendrer un phénomène de résonance dans un circuit antenne du circuit électronique d'identification (2) lorsque ce dernier se trouve à la portée du circuit électronique de détection (8),
- une unité de traitement (11) au sein du circuit électronique de détection (8) pour réaliser une analyse de couplage inductif résonant à partir de l'amplitude d'un signal prélevé sur le circuit antenne (16) du circuit électronique de détection (8), et pour activer le circuit électronique de lecture/écriture (7) de façon à permettre la communication entre ce circuit électronique de lecture/écriture et le circuit électronique d'identification (2) en cas de détection de la présence de ce circuit électronique d'identification.

12. Système selon la revendication 11, **caractérisé en ce qu'**il comprend en outre un cylindre de porte dans lequel sont disposés :
- le circuit électronique de lecture/écriture (7) ;
- le circuit électronique de détection (8) ; et
- une batterie d'alimentation (6).

13. Système selon la revendication 11 ou 12, **caractérisé en ce que** le circuit antenne (16) du circuit électronique de détection (8) comprend un montage RLC, Résistance-Bobine-condensateur ; la bobine (L2) étant utilisée comme antenne d'émission.

14. Système selon l'une quelconque des revendications 11 à 13, **caractérisé en ce que** le circuit électronique de détection comprend un oscillateur (12, 17), un modulateur (13), un convertisseur tension/courant (14) et un microcontrôleur (11) pour :
- commander l'émission du signal d'excitation,
- analyser le couplage inductif résonant après détection de l'amplitude sur la bobine, et
- activer le circuit électronique de lecture/écriture (7) en cas de détection de la présence d'un circuit électronique d'identification (2).

15. Système selon la revendication 14, **caractérisé en ce que** le circuit électronique de détection comprend en outre un circuit de détection d'amplitude (15) disposé entre la bobine (L2) et une entrée du microcontrôleur (11) et comprenant :
- une diode dont l'anode est connectée à la bobine et la cathode au microcontrôleur, et
- un condensateur disposé entre la cathode de la diode et la masse.
